# EUROPÄISCHE PATENTSCHRIFT

(11) **EP 3 010 106 B1**
(45) Veröffentlichungstag und Bekanntmachung des Hinweises auf die Patenterteilung: **13.03.2019**
(21) Anmeldenummer: 15180976.1
(22) Anmeldetag: 13.08.2015
(51) Int. Cl.: H02J 3/06, H02J 5/00, H02J 3/36

(54) **ELEKTRISCHES VERTEILNETZ SOWIE VERFAHREN ZUM BETREIBEN EINES ELEKTRISCHEN VERTEILNETZES**
ELECTRICAL DISTRIBUTION NETWORK AND METHOD FOR OPERATING AN ELECTRICAL DISTRIBUTION NETWORK
RESEAU DE DISTRIBUTION ELECTRIQUE ET PROCEDE DE FONCTIONNEMENT D'UN RESEAU DE DISTRIBUTION ELECTRIQUE

(30) Priorität: 14.10.2014 DE 102014014966
(43) Veröffentlichungstag der Anmeldung: 20.04.2016
(73) Patentinhaber: RWE Deutschland AG, 45128 Essen (DE)
(72) Erfinder: Clemens, Gabriël, Dr., 45481 Mülheim an der Ruhr (DE); Pestka, Joachim, Dr., 46244 Bottrop (DE); Schocke, Mark, 46145 Oberhausen (DE)
(74) Vertreter: Cohausz & Florack

(56) Entgegenhaltungen:
- MARANO-MARCOLINI A ET AL: "Enhancing the integration of renewable sources in distribution systems using DC-links", SUSTAINABLE ALTERNATIVE ENERGY (SAE), 2009 IEEE PES/IAS CONFERENCE ON, IEEE, PISCATAWAY, NJ, USA, 28. September 2009 (2009-09-28), Seiten 1-5, XP031722452, ISBN: 978-1-4244-4430-4
- ROMERO-RAMOS E ET AL: "Assessing the loadability of active distribution networks in the presence of DC controllable links", IET GENERATION, TRANSMISSION&DISTRIBUTION, IET, UK, Bd. 5, Nr. 11, 7. November 2011 (2011-11-07), Seiten 1105-1113, XP006041349, ISSN: 1751-8687, DOI: 10.1049/IET-GTD.2011.0080
- MANUEL BARRAGAN ET AL: "Operational benefits of multiterminal DC-links in active distribution networks", 2012 IEEE POWER AND ENERGY SOCIETY GENERAL MEETING ; SAN DIEGO, CALIFORNIA, USA; 22 - 26 JULY 2012, IEEE, PISCATAWAY, NJ, 22. Juli 2012 (2012-07-22), Seiten 1-6, XP032466124, DOI: 10.1109/PESGM.2012.6345504 ISBN: 978-1-4673-2727-5
- JOHN J NOVAK ET AL: "Better, Faster, and More Economical Integrated Protective Relaying and Control Using Digital Bits and Logic", IEEE TRANSACTIONS ON INDUSTRY APPLICATIONS, IEEE SERVICE CENTER, PISCATAWAY, NJ, US, Bd. 46, Nr. 4, 1. Juli 2010 (2010-07-01), Seiten 1281-1294, XP011310217, ISSN: 0093-9994

## Beschreibung

Der Gegenstand betrifft ein elektrisches Versorgungsnetz mit einem Wechselstrom-Verteilnetz und zumindest zwei Wechselstrom-Mittelspannungsnetzen, wobei die Wechselstrom-Mittelspannungsnetze über jeweils einen Transformator mit dem Wechselstrom Verteilnetz verbunden sind.

Durch die veränderte Erzeugungslandschaft im Stromerzeugungsmarkt entstehen weitergehende Anforderungen an elektrische Versorgungsnetze. Derzeitige elektrische Versorgungsnetze sind durch eine Verkoppelung von Drehstromnetzen gekennzeichnet. In diesen sind Netze in verschiedenen Spannungsebenen, insbesondere die Höchstspannungsebene, die Hochspannungsebene, die Mittelspannungsebene als auch die Niederspannungsebene über geeignete Transformatoren miteinander verkoppelt. Alle Netze sind in der Regel Wechselstrom-Netze.

Die Höchstspannungsebene wird auch Übertragungsnetz genannt. Die Höchstspannungsebene hat je nach Region eine Spannung von in etwa 230, 400, 735, 750 oder 765 kV. Die Hochspannungsebene wird nachfolgend auch Verteilnetz genannt. Die Hochspannungsebene hat je nach Region eine Spannung von in etwa 60 kV bis 150 kV. Über das Verteilnetz finden u.a. Leistungsausgleiche zwischen verschiedenen Wechselstrom-Mittelspannungsnetzen statt Die Mittelspannungsebene wird auch Mittelspannungsnetz genannt. Die Mittelspannungsebene hat je nach Region eine Spannung von in etwa 1 kV bis 35 kV. Gängig sind in ländlichen Installationen 20 kV bis 25 kV und in städtischen Regionen 10 kV.

Aus dem Dokument "Enhancing the integreation of renewable sources in distribution systems using DC-links" XP 31722452A ist eine direkte Gleichspannungsverbindung zwischen zwei Strängen mittels eines Back-to-Back Converters bekannt.

Aus dem Dokument "Assessing the loadability of active distribution nwtworks in the presence of DC controllable links", XP 6041349A sind ebenfalls direkte Gleichspannungsverbindungen in einem Mittelspannungsnetz bekannt.

Schließlich zeigt das Dokument "Operational Benefits of Multiterminal DC-links in Active Distribution Networks", XP 32466124 ebenfalls die Verbindung von Mittelspannungsnetzen über Gleichspannungsverbindungen.

Jedoch erfolgt im oben genannten Stand der Technik die Leistungsflussteuerung nicht abhängig von im Mittelspannungsnetz oder im Verteilnetz gemessenen Leistungsflüssen.

Durch die zunehmende Erzeugung elektrischer Leistung in ländlichen Gebieten, sei es durch Biogas, Photovoltaik oder Windgeneratoren ist diese erzeugte elektrische Energie in Bereiche zu transportieren, in denen das Netz durch den Verbrauch elektrischer Energie, insbesondere im städtischen Bereich, geprägt ist. Diese Leistungsübertragung wird herkömmlicherweise über das Wechselstrom-Verteilnetz, insbesondere in der 110 kV Hochspannungsebene durchgeführt. Für den Leistungsausgleich bzw. die Übertragung elektrischer Leistung vom Ort der Erzeugung zu dem Ort des Verbrauchs werden heutzutage 110 kV Netze eingesetzt.

Gelegentlich ist es jedoch so, dass ein erster Verteilnetz-Strang über einen Transformator mit einem ländlichen Netzbereich gekoppelt ist und ein zweiter Verteilnetz-Strang mit einem städtischen Netzbereich gekoppelt ist. Naheliegend wäre es, die beiden Verteilnetze unmittelbar miteinander zu koppeln. Dies ist jedoch nicht möglich, da durch räumlich zu weit verteilte, insbesondere zu lange Hochspannungsstränge in den Wechselstrom-Verteilnetzen unter anderem eine Kurzschlussleistung zu groß wird, die Löschfähigkeit bei Erdschlüssen begrenzt ist und gegebenenfalls Leistungsflüsse nicht oder nicht mehr ausreichend steuerbar sind.

Bisherige Lösungen bauen auf einem Leistungsausgleich über das vorgelagerte Höchstspannungsnetz auf. Für einen solchen Leistungsausgleich sind sowohl die Hochals auch die Höchstspannungsnetze zu verstärken. Insbesondere sind die Leitungen der Hochspannungsnetze zu den Umspannanlagen in Richtung des Höchstspannungsnetzes zu verstärken und zumindest die Umspannanlagen des Höchstspannungsnetzes selber.

Dem Gegenstand lag somit die Aufgabe zu Grunde, einen gezielt steuerbaren elektrischen Leistungsausgleich zwischen elektrischen Netzen zur Verfügung zu stellen, welcher mit geringem baulichen Aufwand möglich ist.

Diese Aufgabe wird durch ein Versorgungsnetz nach Anspruch 1 sowie ein Verfahren nach Anspruch 7 gelöst.

Mit Hilfe der gegenständlichen Lösung ist es möglich, dass Lastflüsse innerhalb des Verteilnetzes bzw. zwischen zumindest zwei Strängen oder Gruppen des Verteilnetzes derart gesteuert werden, dass die Verteilung regenerativ und dezentral erzeugter elektrischer Leistung ohne eine zusätzliche Belastung des Übertragungsnetzes möglich ist. Mit Hilfe der gegenständlichen Kopplung über eine direkte Gleichspannungsverbindung lässt sich der Leistungsfluss innerhalb der Mittelspannungsnetze als auch der Verteilnetze aktiv beeinflussen. Unterschiedliche Verbrauchs- und Lastverhalten innerhalb der verschiedenen Netze lassen sich durch die Gleichspannungsverbindung kompensieren.

Besonders vorteilhaft ist die Gleichspannungsverbindung über eine gesteuerte leistungselektronische Kupplung. Hier bietet sich insbesondere ein Stromrichter an. Ein Stromrichter wird umgangssprachlich auch als elektrisches Ventil verstanden. Der Stromrichter kann so geschaltet werden, dass die Stromflussrichtung als auch die übertragene Leistung einstellbar ist. Somit ist mit Hilfe des Stromrichters der Leistungsausgleich und die Kompensation unterschiedlicher Verbrauchs- und Lastverhalten besonders einfach möglich. Da die leistungselektronische Kupplung in der Regel die Stromflussrichtung steuert, kann es nicht zu ungewünschten Strömen zwischen den Netzen kommen. Dies ermöglicht eine optimierte Sternpunktbehandlung in jedem einzelnen Netz. Zwar ist durch die Gleichspannungsverbindung eine Energieübertragung zwischen den beiden Netzen möglich, die Sternpunktbehandlung ist jedoch für jedes einzelne Netz möglich. Auch die Erdschlusslöschbedingung für jedes einzelne Netz verschlechtert sich durch die Gleichspannungsverbindung nicht.

Die Ansteuerung des Stromrichters könnte dabei z.B. derart erfolgen, dass dieser innerhalb einer Reaktionszeit von Stufenstellern im Verteilnetz arbeitet. Somit wird durch die Stromrichter bereits eine Spannungsregelung herbeigeführt, bevor ein zentraler Hochspannungsregler, z.B. ein Stufensteller in der Umspannanlage zwischen Übertragungsnetz und Verteilnetz eine Stufung veranlasst.

Beispielsweise könnte eine Spannungsmessung in zumindest zwei Strängen eines Verteilnetzes als Maß für den Blindleistungshaushalt herangezogen werden. Je nach Spannungshöhe der zumindest zwei Messungen in den Strängen des Verteilnetzes kann deren Blindleistungshaushalt an den Bedarf angeglichen werden. Die Steuerung des Stromrichters kann dabei z.B. abhängig von einer konkrete Spannungs-Vorgabe der Netzführung (in MVA) oder durch eine hinterlegte Q(U)-Kennlinie erfolgen. Auch kann die Belastung der Transformatoren zwischen den Strängen des Verteilnetzes und dem Mittelspannungsnetz, insbesondere der Strom den an den Transformatoren in der Mittelspannungsebene gemessen wird, als Stellgröße für den Stromrichter verwendet werden. Sollte sich z.B. eine zu hohe Belastung eines Trafos zeigen, wird der Stromrichter derart angesteuert, dass z.B. über die Gleichspannungsverbindung eine Wirkleistung so geleitet wird, dass möglichst keine Abschaltung erfolgen muss. Dabei ist ebenso die Belastung der beteiligten MS-Leitungen zu beachten.

Das Verteilnetz ist vorzugsweise ein verkoppeltes Drehstromnetz. Einzelne Stränge des Verteilnetzes sind über Transformatoren mit Strängen des Mittelspannungsnetzes verbunden. Die Stränge des Mittelspannungsnetzes sind ihrerseits über Transformatoren (Ortsnetztransformatoren) mit Niederspannungsnetzen (Ortsnetzen) verbunden.

Mit Hilfe des Stromrichters ist es möglich, einen Leistungsfluss zwischen den Strängen des Mittelspannungsnetzes zu regeln. Der Stromrichter weist insbesondere zumindest einen Gleichrichter und zumindest einen Wechselrichter sowie zumindest eine dazwischen angeordnete Gleichstromübertragungsstrecke auf. Der Stromrichter kann in einem Gehäuse gekapselt sein. Es ist beispielsweise möglich, dass eine Kopplung in einem integrierten Stromrichter mit 0,4 bis 3,3 kV erfolgt. Auch ist es möglich, dass der Stromrichter durch räumlich voneinander getrennte Gleich- /Wechselrichter gebildet ist. So ist es beispielsweise möglich, dass eingangsseitig an einem Strang des Mittelspannungsnetzes ein Gleichrichter angeordnet ist. Der Ausgang des Gleichrichters ist über eine Gleichspannungsübertragungsleitung mit einem Eingang eines Wechselrichters verbunden. Der Wechselrichter ist ausgangsseitig mit einem zweiten Strang des Mittelspannungsnetzes verbunden. Ein derartiges Konzept wäre z.B. für die vorzugsweise räumlich kurze Kopplung von Strängen des Mittelspannungsnetzes denkbar.

Das Verteilnetz kann aus einzelnen, voneinander getrennt betriebenen Leitungssträngen gebildet sein. Jeder dieser Leitungsstränge kann als eine Hochspannungsgruppe betrachtet werden.

Die Leitungsstränge des Verteilnetzes zweigen von einer Umspannanlage aus einem übergeordneten Übertragungsnetz ab. Die Hochspannungsgruppen des Verteilnetzes sind vorzugsweise durch voneinander getrennte Leitungsstränge gebildet. Jeweils eine der Hochspannungsgruppen ist über zumindest einen Transformator mit zumindest einem Strang des Mittelspannungsnetzes verbunden. Ein Leistungsausgleich zwischen den Hochspannungsgruppen und/oder den Strängen des Mittelspannungsnetzes über die direkte Gleichspannungsverbindung kann nun derart erfolgen, dass die Hochspannungsgruppen miteinander über die Gleichspannungsverbindung verbunden werden. Hierbei kann auch eine Verbindung von zwei Strängen des Mittelspannungsnetzes, die aus den verschiedenen Hochspannungsgruppen gespeist werden, als eine solche Verbindung angesehen werden. Für eine Leistungsübertragung ist es nicht mehr notwendig, den gesamten Leitungsstrang der Hochspannungsgruppen als auch die Hochspannanlage zwischen dem Verteilnetz und dem Übertragungsnetz mit dieser elektrischen Leistung zu beaufschlagen.

Gemäß einem Ausführungsbeispiel wird vorgeschlagen, dass eine erste Messeinrichtung zur Erfassung eines Leistungsflusses in einem ersten Strang des Mittelspannungsnetz angeordnet ist. Durch die dezentrale Erzeugung von elektrischer Leistung kommt es regelmäßig vor, dass in einem Strang des Mittelspannungsnetzes ein Leistungsüberschuss vorhanden ist. Dieser kann sich beispielsweise durch Veränderung der Spannung oder des Phasenwinkels zwischen den beteiligten Strängen des Mittelspannungsnetzes darstellen. Mit Hilfe der Messeinrichtung kann erfasst werden, ob ein Leistungsüberfluss oder eine Leistungsunterdeckung vorhanden ist. Eine zweite Messeinrichtung kann entsprechend einem Leistungsfluss in einem zweiten Strang des Mittelspannungsnetzes erfassen. Wird festgestellt, dass in einem ersten Strang ein Leistungsüberfluss und in einem zweiten Strang eine Unterdeckung vorhanden ist und sind die beiden Stränge über eine Gleichspannungsverbindung miteinander gekoppelt, so ist es möglich, dass durch die Messeinrichtungen die Kupplung angewiesen wird, eine elektrische Leistung aus dem Strang mit der Überdeckung in den Strang mit der Unterdeckung zu übertragen.

Es sei angemerkt, dass bevorzugt ist, dass die miteinander gekoppelten Stränge des Mittelspannungsnetzes jeweils über zumindest einen Transformator mit jeweils einem Strang des Verteilnetzes gekoppelt sind. Dabei sind die Stränge des Verteilnetzes voneinander verschieden.

Insbesondere kann der Stromrichter so eingestellt werden, dass elektrischer Strom aus dem Strang mit der Überdeckung in Richtung des Stranges mit der Unterdeckung fließt. Durch geeignete Einstellung des Stromrichters sind die Wirk- als auch Blindleistungen in dem jeweiligen Strang einstellbar. Insbesondere ist es möglich, den Phasenwinkel der eingespeisten elektrischen Spannung und des eingespeisten elektrischen Stroms zueinander einzustellen, sodass die Wirk- und Blindleistungen in dem jeweiligen Strang optimiert werden.

Gemäß einem Ausführungsbeispiel wird vorgeschlagen, dass eine Gleichspannungsquelle und/oder eine Gleichspannungssenke über die Gleichspannungsverbindung mit dem Mittelspannungsnetz verbunden ist. Durch die Einbindung einer Gleichspannungsverbindung auf Mittelspannungsebene ist es besonders einfach möglich, unmittelbar Gleichstromverbraucher oder Gleichstromerzeuger in das Verteilnetz einzubinden. Beispielsweise können Elektrolyseure für Power-to-Gas an die Gleichspannungsverbindung angeschlossen werden. Auch ist es möglich, Windparks oder Photovoltaikanlagen unmittelbar über Gleichstrom an das Verteilnetz anzukoppeln.

Ein weiterer Aspekt ist ein Verfahren zum Betreiben eines elektrischen Versorgungsnetzes nach Anspruch 8.

In einem gekoppelten Drehstromnetz wird eine Gleichspannungsverbindung zwischen zwei voneinander getrennt betriebenen Strängen des Mittelspannungsnetzes betrieben. Über diese Gleichspannungsverbindung ist ein Leistungsausgleich zwischen diesen Strängen in besonders einfacher Weise möglich. Der Leistungsfluss durch die Gleichspannungsverbindung ist durch Verwendung von geeigneter Stromrichtertechnik einstellbar. Insbesondere ist die Stromrichtung einstellbar. Der Stromrichter kann in der Art eines elektrischen Ventils Leistung von einem ersten Strang in einen zweiten Strang übertragen, ohne dass es zu einer Leistungsrückkopplung aus dem zweiten Strang in den ersten Strang kommt.

Ein weiterer Aspekt ist, dass eine Stromflussrichtung in der Gleichspannungsverbindung abhängig von einem Leistungsfluss in den Strängen des Mittelspannungsnetzes geregelt wird. Insbesondere die Stromflussrichtung kann zumindest abhängig von den Phasenwinkeln in den jeweiligen Strängen und ggf. weiteren netztechnischen Gegebenheiten (z.B. Störung, Blindleistungsbedarf des vorgelagerten Netzes) von der Netzführung beeinflusst werden.
Mit Hilfe der Gleichspannungsverbindung ist es möglich, elektrische Leistung geregelt in ein erstes Strang des Mittelspannungsnetzes aus einem zweiten Strang des Mittelspannungsnetzes einzuspeisen. Hierbei kann eine Blindleistungskompensation in zumindest einem der Stränge erfolgen. Durch geeignete Einstellung der Phasenwinkel kann die Blindleistung in den Strängen des Mittelspannungsnetzes geregelt werden. Elektrische Asymmetrien zwischen den einzelnen Phasen innerhalb eines Stranges können ggf. über geeignete Schaltung der Gleichspannungsverbindung, insbesondere des Stromrichters kompensiert werden.

Nachfolgend wird der Gegenstand anhand einer Ausführungsbeispiele zeigenden Zeichnung näher erläutert. In der Zeichnung zeigen:
- Fig. 1: einen schematischer Aufbau eines ersten gekoppelten Drehstromnetzes;
- Fig. 2: einen schematischen Aufbau eines zweiten gekoppelten Drehstromnetzes;
- Fig. 3: eine weitere schematische Ansicht eines gekoppelten Drehstromnetzes;

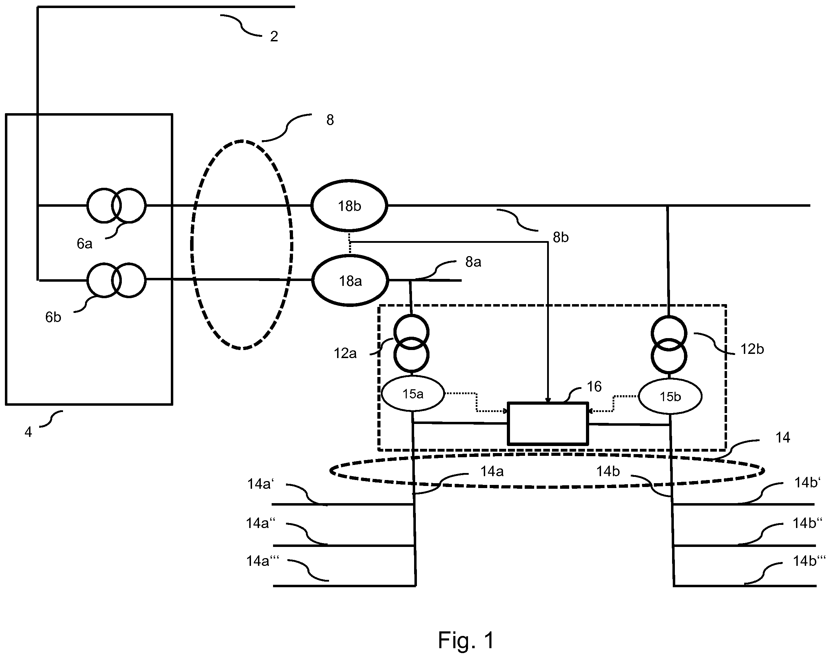

Figur 1 zeigt schematisch den Aufbau eines gekoppelten Drehstromnetzes, insbesondere eines Versorgungsnetzes. Der Einfachheit halber ist jeweils nur eine Leitung gezeichnet, wobei das Versorgungsnetz in der Regel ein dreiphasiges Drehstromnetz ist. Die nachfolgende Beschreibung gilt natürlich für jeweils alle Phasen des Versorgungsnetzes. Ein Höchstspannungsnetz 2 (Übertragungsnetz) ist in einer Umspannanlage 4 über zumindest einen Transformator 6a, 6b mit jeweils einer Hochspannungsgruppe 8a, 8b eines Hochspannungsnetzes (Verteilnetzes) 8 verbunden.

Das Verteilnetz 8 ist gebildet aus verschiedenen Hochspannungsgruppen 8a, 8b. Jede Hochspannungsgruppe 8a, 8b kann zumindest einen Leitungsstrang aufweisen. Die Hochspannungsgruppen 8a, 8b können vorzugsweise nur im Bereich des Umspannwerks 4 miteinander elektrisch verbunden sein.
Vorzugsweise ist jede Hochspannungsgruppe 8a, 8b über eine Mehrzahl, z.B. drei bis vier Einspeisetransformatoren 6a, 6b aus dem Übertragungsnetz 2 gespeist. Jede der Hochspannungsgruppen 8a, 8b verfügt über eine Mehrzahl an Umspannanlagen 10 mit Strängen eines Mittelspannungsnetzes 14. Nachfolgend gezeigt ist eine solche Umspannanlage 10 in der eine Hochspannungs- zu Mittelspannungsumwandlung erfolgt. Gezeigt sind beispielhaft die Hochspannungsgruppen 8a und 8b die über jeweils einen Transformator 12a, 12b mit jeweils einem Strang 14a, 14b des Mittelspannungsnetzes 14 verbunden sind. Ausgehend von dem Transformator 12b zweigen mehrere Leitungen 14b', 14b" und 14b'" des Strangs 14b ab. Dasselbe gilt für den Strang 14a, bei dem ausgehend von dem Transformator 12a mehrere Leitungen 14a', 14a" und 14a'" abzweigen.

In der Umspannanlage 10 ist ein Stromrichter 16 angeordnet. Der Stromrichter 16 bildet eine direkte Gleichspannungsverbindung zwischen dem Strang 14b des Mittelspannungsnetzes 14 und dem Strang 14a des Mittelspannungsnetzes 14. Diese direkte Verbindung ist räumlich vorzugsweise innerhalb der Umspannanlage 10 gebildet. Dies führt dazu, dass der Stromrichter 16 aus einer baulichen Einheit gebildet sein kann. In dem Stromrichter 16 ist auf jeder Seite des Eingangs ein Gleich- und/oder Wechselrichter angeordnet, sodass über geeignete Beschaltung die Stromflussrichtung zwischen den Strängen 14a und 14b einstellbar ist. Dies ist pro Phase möglich und Phasenwinkel lassen sich ebenfalls einstellen.

In den Hochspannungsgruppen 8a und 8b sind jeweils Messeinrichtungen 18a und 18b vorgesehen. Mit Hilfe der Messeinrichtung 18a, 18b lassen sich die Leistungsflüsse innerhalb der Hochspannungsgruppen 8a, 8b messen. Insbesondere lassen sich Phasenwinkel und Spannungen in den Hochspannungsgruppen 8a und 8b ermitteln. In den Strängen 14a und 14b des Mittelspannungsnetzes 14 können ebenfalls Messeinrichtungen 15a, 15b angeordnet sein. Mit Hilfe der Messeinrichtung 15a, 15b lassen sich die Leistungsflüsse innerhalb der Stränge 14a, 14b messen .Insbesondere lassen sich Phasenwinkel und Spannungen in den Strängen 14a und 14b ermitteln.

Mit Hilfe der Messergebnisse zumindest einer der Messeinrichtungen 15, 18 ist es möglich, Leistungsüberschüsse oder Leistungsunterdeckungen zu detektieren. Abhängig von den detektierten Leistungsüberschüssen bzw.
Leistungsunterdeckungen, die durch Auswertung der Messwerte der Messeeinrichtung 18a, 18b und/oder 15a, 15b ermittelt werden, wird der Stromrichter 16 angesteuert. Über den Stromrichter 16 kann somit elektrische Leistung von dem Strang 14b in den Strang 14a oder umgekehrt transferiert werden. Hierdurch lässt sich ein Lastausgleich zwischen den ansonsten voneinander getrennten Strängen 14b, 14a realisieren. Der Lastenausgleich ist nicht mehr über die Hochspannungsgruppen 8a, 8b und den diesen zugeordneten Transformatoren 6a, b notwendig. Vielmehr wird das Verteilnetz 8 durch diese Ausgleichsströmen nicht belastet, sondern die Ausgleichströme fließen unmittelbar mittelspannungsseitig zwischen den Strängen 14b und 14a.

Bei der in Figur 1 dargestellten Lösung ist der Stromrichter 16 in räumlich unmittelbarer Nähe zu den Transformatoren 12a und 12b, insbesondere innerhalb der Umspannanlage 10. Hierdurch entfällt ein Gleichstromkabel, obschon der Stromrichter 16 eine Gleichstromverbindung darstellt und der Lastausgleich in besonders einfacher Weise möglich ist.

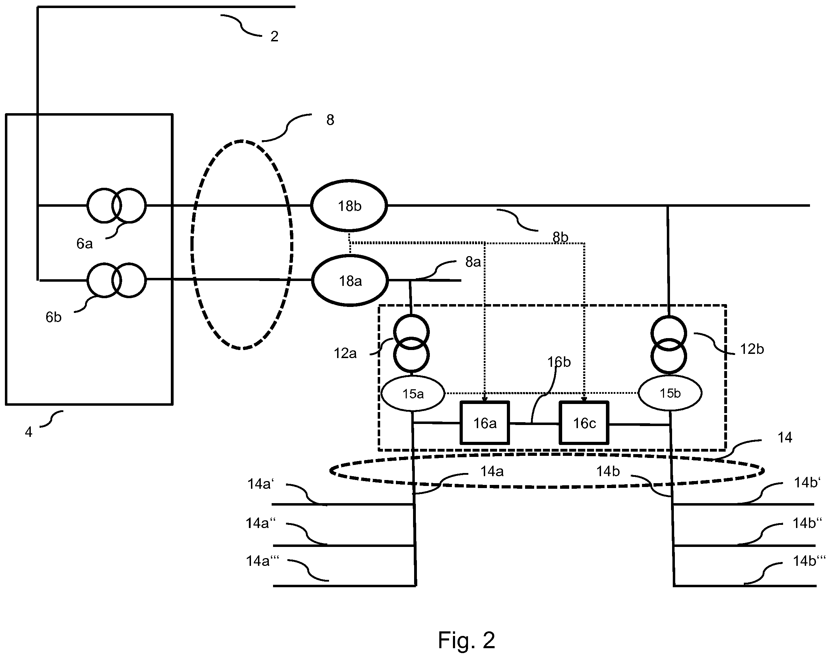

Ein Lastausgleich ist jedoch auch dann möglich, wenn die Mittelspannungsnetze 14a, 14b räumlich voneinander getrennt sind. Dies ist beispielhaft in der Figur 2 dargestellt. In den Figuren zeigen gleiche Bezugszeichen gleiche Elemente, soweit sinnvoll.

Im Unterschied zu der Figur 1 ist in der Figur 2 die direkte Gleichspannungsverbindung über einen Umrichter 16a, ein Gleichspannungskabel 16b und einen Umrichter 16c gebildet. Die beiden Umrichter 16a und 16b können beide jeweils eine Wechselrichtung als auch eine Gleichrichtung durchführen, sodass die Stromflussrichtung in beide Richtungen zwischen den Mittelspannungsnetzen 14b und 14a einstellbar ist. Die Stromflussrichtung wird abhängig von den durch die Messeinrichtung 18a, 18b und/oder 15a, 15b gemessenen Messwerte eingestellt. Im Falle eines Stromflusses von dem Strang 14a in den Strang 14b ist der Umrichter 16a als Gleichrichter betrieben. Wechselspannung aus dem Strang 14a wird in dem Umrichter 16a gleichgerichtet und über das Gleichstromkabel 16b in den Umrichter 16c übertragen. In dem Umrichter 16c erfolgt eine Wechselrichtung, sodass der resultierende Wechselstrom in den Strang 14b gespeist werden kann. Es versteht sich, dass das Gleichstromkabel 16b auch innerhalb eines Gehäuses zusammen mit den Umrichtern 16a, 16b angeordnet sein kann. Die Umrichter 16a, 16 können räumlich nah zueinander angeordnete, insbesondere innerhalb einer Umspannanlage 10 angeordnet sein.

Sowohl die Gleichrichtung als auch die Wechselrichtung ermöglicht eine gezielte Beeinflussung des Leistungsflusses. Spannungen zwischen den verschiedenen Strängen lassen sich durch Blindleistungsbezug bzw. -abgabe in den Strängen 14a und 14b beeinflussen.

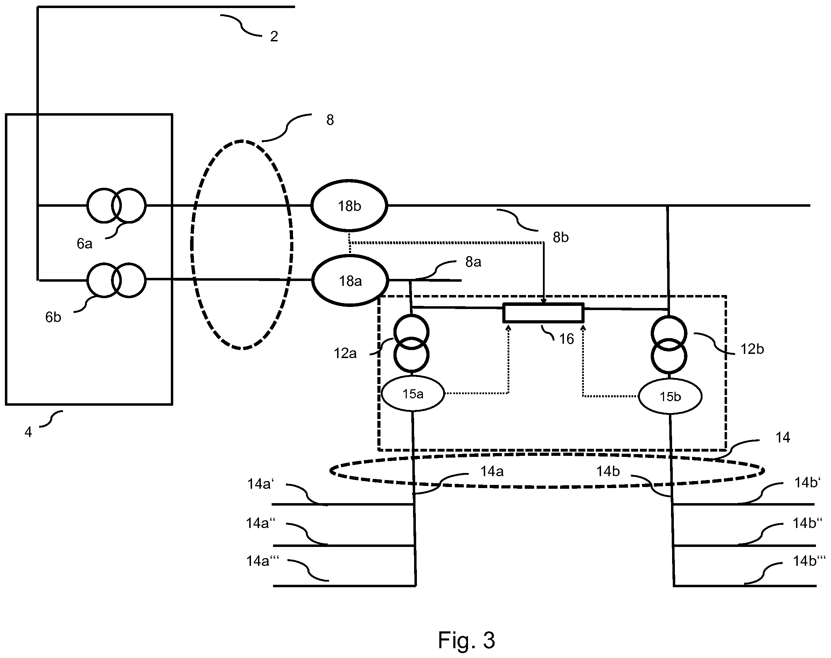

Figur 3 zeigt ein weiteres Ausführungsbeispiel, bei dem der Stromrichter 16 primärseitig an den Transformatoren 12b und 12a angeordnet ist. Dieser Stromrichter 16 wirkt unmittelbar auch auf den Hochspannungsgruppen 8a und 8b, führt jedoch im Grunde eine identische Leistungsübertragung wie die zuvor beschriebenen Stromrichter durch.

Der guten Ordnung halber sei angemerkt, dass die Mittelspannungsstränge 14a, 14b über Ortsnetztransformatoren mit den niederspannungsseitigen Ortsnetzen verbunden sind.

Über die direkte Gleichstromverbindung zwischen den Strängen des Mittelspannungsnetzes ist es möglich, einen Leistungsausgleich zwischen verschiedenen Strängen eines Mittelspannungsnetzen zu gewährleisten, die geprägt sind durch entweder einen großen Anteil Erzeugung elektrischer Leistung auf der einen Seite und auf der anderen Seite durch einen hohen Verbrauch. Der Leistungsausgleich wird nicht mehr zwingend über das vorgelagerte Netz notwendig, sodass dessen Ausbau gedrosselt werden kann.

## Patentansprüche

1. Elektrisches Versorgungsnetz mit
- einem Wechselstrom-Verteilnetz (8) und
- zumindest zwei Strängen (14a, b) eines Wechselstrom-Mittelspannungsnetzes (14),
- wobei die Stränge (14a, b) des Wechselstrom-Mittelspannungsnetzes (14) über jeweils einen Transformator (12a, b) mit dem Wechselstrom-Verteilnetz (8) verbunden sind,
**dadurch gekennzeichnet,**
- **dass** zwischen den Strängen (14a, b) des Wechselstrom-Mittelspannungsnetzes (14) eine direkte Gleichspannungsverbindung (16, 16 a, b, c) gebildet ist, wobei
- die Gleichspannungsverbindung (16, 16a, b, c) über eine gesteuerte leistungselektronische Kupplung (16) gebildet ist,
- eine erste Messeinrichtung (15a) zur Erfassung eines Leistungsflusses in einem ersten Wechselstrom-Mittelspannungsnetz (14) angeordnet ist und eine zweite Messeinrichtung (15b) zur Erfassung eines Leistungsflusses in einem zweiten Wechselstrom-Mittelspannungsnetz (14) angeordnet ist und die Messeinrichtungen (15a, b) mit der Kupplung (16) in Wirkverbindung stehen, derart, dass ein Leistungsfluss durch die Kupplung (16) abhängig von den durch die Messeinrichtungen (15a,b) erfassten Leistungsflüssen in den Wechselstrom-Mittelspannungsnetz (14) ist und/oder
- eine erste Messeinrichtung (18a) zur Erfassung eines Leistungsflusses in einer ersten Hochspannungsgruppe (8a) angeordnet ist und eine zweite Messeinrichtung (18b) zur Erfassung eines Leistungsflusses in einer zweiten Hochspannungsgruppe (8b) angeordnet ist und die Messeinrichtungen (18a, b) mit der Kupplung (16) in Wirkverbindung stehen, derart, dass ein Leistungsfluss durch die Kupplung (16) abhängig von den durch die Messeinrichtungen (18a, b) erfassten Leistungsflüssen in den Hochspannungsgruppen (8a, b) ist.

2. Elektrisches Versorgungsnetz nach Anspruch 1,
**dadurch gekennzeichnet,**
**dass** die Kupplung (16) in Form eines Stromrichters gebildet ist

3. Elektrisches Versorgungsnetz nach Anspruch 2,
**dadurch gekennzeichnet,**
**dass** der Stromrichter (16) einen Leistungsfluss zwischen den Strängen (14a, b) des Wechselstrom-Mittelspannungsnetzes (14) regelt.

4. Elektrisches Versorgungsnetz nach einem der vorangehenden Ansprüche,
**dadurch gekennzeichnet,**
**dass** die Transformatoren (12a, b) räumlich innerhalb einer Umspannanlage angeordnet sind.

5. Elektrisches Versorgungsnetz nach einem der vorangehenden Ansprüche,
**dadurch gekennzeichnet,**
**dass** das Wechselstrom-Verteilnetz (8) aus zumindest zwei Hochspannungsgruppen (8a, b) gebildet ist, und
**dass** jeweils ein Strang (14a) des Wechselstrom-Mittelspannungsnetzes (14) über einen der Transformatoren (12a) mit jeweils einer der Hochspannungsgruppen (8a) verbunden ist.

6. Elektrisches Versorgungsnetz nach einem der vorangehenden Ansprüche,
**dadurch gekennzeichnet,**
**dass** eine Gleichspannungsquelle und/oder eine Gleichspannungssenke über die Gleichspannungsverbindung (16, 16a, b, c) mit dem Mittelspannungsnetz (14) verbunden ist.

7. Verfahren zum Betreiben eines elektrischen Versorgungsnetz umfassend,
- elektrisches Verbinden zweier Stränge (14a, b) eines Mittelspannungsnetzes (14) über ein Verteilnetz (8), und
- gleichzeitiges elektrisches Verbinden der beiden Stränge (14a, b) des Mittelspannungsnetzes (14) über eine direkte Gleichspannungsverbindung (16, 16a, 16b) wobei
- die Gleichspannungsverbindung (16, 16a, b, c) über eine gesteuerte leistungselektronische Kupplung (16) bewirkt wird, und
- eine erste Messeinrichtung (15a) einen Leistungsfluss in einem ersten Wechselstrom-Mittelspannungsnetz (14) erfasst und eine zweite Messeinrichtung (15b) einen Leistungsfluss in einem zweiten Wechselstrom-Mittelspannungsnetz (14) erfasst und die Messeinrichtungen (15a, b) mit der Kupplung (16) in Wirkverbindung stehen, derart, dass ein Leistungsfluss durch die Kupplung (16) abhängig von den durch die Messeinrichtungen (15a,b) erfassten Leistungsflüssen in den Wechselstrom-Mittelspannungsnetz (14) ist und/oder
- eine erste Messeinrichtung (18a) einen Leistungsfluss in einer ersten Hochspannungsgruppe (8a) erfasst und eine zweite Messeinrichtung (18b) einen Leistungsfluss in einer zweiten Hochspannungsgruppe (8b) erfasst und die Messeinrichtungen (18a, b) mit der Kupplung (16) in Wirkverbindung stehen, derart, dass ein Leistungsfluss durch die Kupplung (16) abhängig von den durch die Messeinrichtungen (18a, b) erfassten Leistungsflüssen in den Hochspannungsgruppen (8a, b) ist.

8. Verfahren nach Anspruch 7,
**dadurch gekennzeichnet,**
**dass** eine Stromflussrichtung in der Gleichspannungsverbindung (16, 16a, b, c) abhängig von einem Leistungsfluss in den Strängen (14a, 14b) des Mittelspannungsnetzes (14) und/oder von einem Leistungsfluss in Hochspannungsgruppen (8a, b) des Verteilnetzes (8) geregelt wird.

9. Verfahren nach Anspruch 7 oder 8,
**dadurch gekennzeichnet,**
**dass** mittels der direkten Gleichspannungsverbindung (16, 16a, b, c) durch eine geregelte Einspeisung von elektrischer Leistung aus einem ersten Strang (14a) in einen zweiten Strang (14b) des Mittelspannungsnetzes (14) eine Blindleistungskompensation und/oder eine Kompensation von elektrischen Unsymmetrien durchgeführt wird.

10. Verfahren nach einem der Ansprüche 7 bis 9,
**dadurch gekennzeichnet,**
**dass** die Gleichspannungsverbindung (16, 16a, b, c) durch zumindest einen Stromrichter gebildet wird.

## Claims

1. Electrical supply grid comprising
- an AC distribution grid (8) and
- at least two strings (14a, b) of an AC medium-voltage grid (14),
- wherein the strings (14a, b) of the AC medium-voltage grid (14) are connected to the AC distribution grid (8) via a respective transformer (12a, b),
**characterised in that**
- a direct DC voltage connection (16, 16a, b, c) is formed between the strings (14a, b) of the AC medium-voltage grid (14), the DC voltage connection (16, 16a, b, c) being formed by a controlled electronic power coupling (16),
- a first measuring device (15a) is arranged for detecting a power flow in a first AC medium-voltage grid (14) and a second measuring device (15b) is arranged for detecting a power flow in a second AC medium-voltage grid (14), and the measuring devices (15a, b) are operatively connected to the coupling (16) such that a power flow through the coupling (16) is dependent on the power flows, detected by the measuring devices (15a, b), within the AC medium-voltage grid (14), and/or
- a first measuring device (18a) is arranged for detecting a power flow in a first high-voltage group (8a) and a second measuring device (18b) is arranged for detecting a power flow in a second high-voltage group (8b), and the measuring devices (18a, b) are operatively connected to the coupling (16) such that a power flow through the coupling (16) is dependent on the power flows, detected by the measuring devices (18a, b), within the high-voltage groups (8a, b).

2. Electrical supply grid according to Claim 1,
**characterised in that**
the coupling (16) is formed as a static power converter.

3. Electrical supply grid according to Claim 2,
**characterised in that**
the static power converter (16) controls a power flow between the strings (14a, b) of the AC medium-voltage grid (14).

4. Electrical supply grid according to any one of the preceding claims,
**characterised in that**
the transformers (12a, b) are arranged spatially inside a substation.

5. Electrical supply grid according to any one of the preceding claims,
**characterised in that**
the AC distribution grid (8) is formed from at least two high-voltage groups (8a, b), and a respective string (14a) of the AC medium-voltage grid (14) is connected to respectively one of the high-voltage groups (8a) via one of the transformers (12a).

6. Electrical supply grid according to any one of the preceding claims,
**characterised in that**
a DC voltage source and/or a DC voltage drain is connected to the medium-voltage grid (14) via the DC voltage connection (16, 16a, b, c).

7. Method for operating an electrical supply grid comprising
- electrically connecting two strings (14a, b) of a medium-voltage grid (14) via a distribution grid (8), and
- at the same time electrically connecting the two strings (14a, b) of the medium-voltage grid (14) via a direct DC voltage connection (16, 16a, 16b), wherein
- the DC voltage connection (16, 16a, b, c) obtained by a controlled electronic power coupling (16), and
- a first measuring device (15a) detects a power flow in a first AC medium-voltage grid (14) and a second measuring device (15b) detects a power flow in a second AC medium-voltage grid (14), and the measuring devices (15a, b) are operatively connected to the coupling (16) such that a power flow through the coupling is dependent on the power flows, detected by the measuring devices (15a, b), within the AC medium-voltage grid (14), and/or
- a first measuring device (18a) detects a power flow in a first high-voltage group (8a) and a second measuring device (18b) detects a power flow in a second high-voltage group (8b), and the measuring devices (18a, b) are operatively connected to the coupling (16) such that a power flow through the coupling (16) is dependent on the power flows, detected by the measuring devices (18a, b), within the high-voltage groups (8a, b).

8. Method according to Claim 7,
**characterised in that**
a current flow direction in the DC voltage connection (16, 16a, b, c) is controlled dependent on a power flow in the strings (14a, 14b) of the medium-voltage grid (14) and/or on a power flow within the high-voltage groups (8a, b) of the distribution grid (8).

9. Method according to Claim 7 or 8,
**characterised in that**
a reactive power compensation and/or a compensation of electrical unbalances is carried out by means of the direct DC voltage connection (16, 16a, b, c) by a controlled infeed of electrical power from a first string (14a) into a second string (14b) of the medium-voltage grid (14).

10. Method according to any of Claims 7 to 9,
**characterised in that**
the DC voltage connection (16, 16a, b, c) is formed by at least one static power converter.

## Revendications

1. Réseau de distribution électrique comprenant :
- un réseau de distribution en courant alternatif (8) et
- au moins deux phases (14a, b) d'un réseau de moyenne tension en courant alternatif (14),
- où les phases (14a, b) du réseau de moyenne tension en courant alternatif (14) sont à chaque fois connectées au réseau de distribution en courant alternatif (8), par un transformateur (12a, b),
**caractérisé**
- **en ce qu'**une connexion directe en tension continue (16, 16a, b, c) est formée entre les phases (14a, b) du réseau de moyenne tension en courant alternatif (14),
où
- la connexion en tension continue (16, 16a, b, c) est formée par un coupleur (16) à électronique de puissance pilotée,
- un premier dispositif de mesure (15a) servant à la détection d'un flux de puissance est disposé dans un premier réseau de moyenne tension en courant alternatif (14), et un deuxième dispositif de mesure (15b) servant à la détection d'un flux de puissance est disposé dans un deuxième réseau de moyenne tension en courant alternatif (14), et les dispositifs de mesure (15a, b) sont en liaison active avec le coupleur (16), de manière telle qu'un flux de puissance à travers le coupleur (16) soit fonction des flux de puissance détectés par les dispositifs de mesure (15a, b), dans le réseau de moyenne tension en courant alternatif (14), et/ou
- un premier dispositif de mesure (18a) servant à la détection d'un flux de puissance est disposé dans un premier groupe à haute tension (8a), et un deuxième dispositif de mesure (18b) servant à la détection d'un flux de puissance est disposé dans un deuxième groupe à haute tension (8b), et les dispositifs de mesure (18a, b) sont en liaison active avec le coupleur (16), de manière telle qu'un flux de puissance à travers le coupleur (16) soit fonction des flux de puissance détectés par les dispositifs de mesure (18a, b), dans les groupes à haute tension (8a, b).

2. Réseau de distribution électrique selon la revendication 1,
**caractérisé**
**en ce que** le coupleur (16) est configuré sous la forme d'un convertisseur de courant.

3. Réseau de distribution électrique selon la revendication 2,
**caractérisé**
**en ce que** le convertisseur de courant (16) régule un flux de puissance entre les phases (14a, b) du réseau de moyenne tension en courant alternatif (14).

4. Réseau de distribution électrique selon l'une quelconque des revendications précédentes,
**caractérisé**
**en ce que** les transformateurs (12a, b) sont disposés physiquement à l'intérieur d'un poste de transformation.

5. Réseau de distribution électrique selon l'une quelconque des revendications précédentes,
**caractérisé**
**en ce que** le réseau de distribution en courant alternatif (8) est formé par au moins deux groupes à haute tension (8a, b), et
**en ce qu'**une phase (14a) du réseau de moyenne tension en courant alternatif (14) est connectée à chaque fois à l'un des groupes à haute tension (8a), par l'un des transformateurs (12a).

6. Réseau de distribution électrique selon l'une quelconque des revendications précédentes,
**caractérisé**
**en ce qu'**une source de tension continue et/ou un collecteur de tension continue est connecté(e) au réseau de moyenne tension (14), par la connexion en tension continue (16, 16a, b, c).

7. Procédé de fonctionnement d'un réseau de distribution électrique comprenant :
- une connexion électrique de deux phases (14a, b) d'un réseau de moyenne tension (14) via un réseau de distribution (8), et
- une connexion électrique simultanée des deux phases (14a, b) du réseau de moyenne tension (14), par une connexion directe en tension continue (16, 16a, 16b),
où
- la connexion en tension continue (16, 16a, b, c) est réalisée par un coupleur (16) à électronique de puissance pilotée, et
- un premier dispositif de mesure (15a) détecte un flux de puissance dans un premier réseau de moyenne tension en courant alternatif (14), et un deuxième dispositif de mesure (15b) détecte un flux de puissance dans un deuxième réseau de moyenne tension en courant alternatif (14), et les dispositifs de mesure (15a, b) sont en liaison active avec le coupleur (16), de manière telle qu'un flux de puissance à travers le coupleur (16) soit fonction des flux de puissance détectés par les dispositifs de mesure (15a, b), dans le réseau de moyenne tension en courant alternatif (14), et/ou
- un premier dispositif de mesure (18a) détecte un flux de puissance dans un premier groupe à haute tension (8a), et un deuxième dispositif de mesure (18b) détecte un flux de puissance dans un deuxième groupe à haute tension (8b), et les dispositifs de mesure (18a, b) sont en liaison active avec le coupleur (16), de manière telle qu'un flux de puissance à travers le coupleur (16) soit fonction des flux de puissance détectés par les dispositifs de mesure (18a, b), dans les groupes à haute tension (8a, b).

8. Procédé selon la revendication 7,
**caractérisé**
**en ce qu'**une direction de flux de courant, dans la connexion en tension continue (16, 16a, b, c), est réglée en fonction d'un flux de puissance dans les phases (14a, 14b) du réseau de moyenne tension (14) et/ou en fonction d'un flux de puissance dans des groupes à haute tension (8a, b) du réseau de distribution (8).

9. Procédé selon la revendication 7 ou 8,
**caractérisé**
**en ce qu'**une compensation de puissance réactive et/ou une compensation d'asymétries électriques est réalisée au moyen de la connexion directe en tension continue (16, 16a, b, c), par une alimentation régulée de la puissance électrique passant d'une première phase (14a) à une deuxième phase (14b) du réseau de moyenne tension (14).

10. Procédé selon l'une quelconque des revendications 7 à 9,
**caractérisé**
**en ce que** la connexion en tension continue (16, 16a, b, c) est formée par au moins un convertisseur de courant.
